# EUROPÄISCHE PATENTSCHRIFT

(11) **EP 1 841 516 B1**
(45) Veröffentlichungstag und Bekanntmachung des Hinweises auf die Patenterteilung: **21.05.2008**
(21) Anmeldenummer: 05806357.9
(22) Anmeldetag: 04.11.2005
(51) Int. Cl.: B01D 53/26

(54) **ADSORPTIONSTROCKNER FÜR GASFÖRMIGE MEDIEN MIT MINDESTENS EINEM ROHRFÖRMIGEN DRUCKBEHÄLTER**
ADSORPTION DRYER FORGASEOUS MEDIA COMPRISING AT LEAST ONE TUBULAR PRESSURE RESERVOIR
SECHEUR PAR ADSORPTION POUR MILIEUX GAZEUX COMPRENANT AU MOINS UN RESERVOIR TUBULAIRE SOUS PRESSION

(30) Priorität: 24.01.2005 DE 102005003377
(43) Veröffentlichungstag der Anmeldung: 10.10.2007
(73) Patentinhaber: Zander Aufbereitungstechnik GmbH, 45219 Essen (DE)
(72) Erfinder: PRIESS, Günter, 47807 Krefeld (DE); ZACHOS, Alexandros, 45136 Essen (DE)
(74) Vertreter: Cohausz & Florack
(86) Internationale Anmeldenummer: PCT/EP2005/011812
(87) Internationale Veröffentlichungsnummer: WO 2006/079371

(56) Entgegenhaltungen:
- US-A- 4 764 189
- US-A- 4 828 589
- US-A- 5 595 588

## Beschreibung

Die Erfindung betrifft einen Adsorptionstrockner für gasförmige Medien mit mindestens einem mit Trockenmittel gefüllten Druckbehälter, der zwischen einer bodenseitigen und einer kopfseitigen, Verbindungskanäle und Anschlüsse für die Zu- und Abfuhr der Medien aufweisenden Verteilerplatte angeordnet ist und eine zylindrische Kammer für das Trockenmittel aufweist, das in der Kammer bodenseitig und kopfseitig jeweils von einem gegenüber der Wand der Kammer abgedichteten Kolben abgestützt ist, wobei die Abstützung an mindestens einer Seite über eine am benachbarten Kolben mit einer Druckfeder abgestützten gasdurchlässigen Platte erfolgt und wobei die Kammer über in den Kolben abgedichtete Leitungen an die Verbindungskanäle in den Verteilerplatten angeschlossen ist.

Adsorptionstrockner dieser Art sind bekannt. Sofern sie zwei und mehr Druckbehälter aufweisen, werden sie üblicherweise im Wechsel "Trocknen-Regenerieren" betrieben. Bei einem solchen aus der Praxis bekannten Adsorptionstrockner besteht der Druckbehälter aus einem zylindrischen Rohrstück mit darin auf beiden Seiten des Trockenmittels abgedichtet eingesetzten Kolben. Die Kolben sind auf ihrer dem Trockenmittel abgewandten Seite einteilig mit stopfenförmigen Schraubverschlüssen ausgebildet, die im Rohrstück einschraubbar sind. Die Herstellung und die Montage solcher Kolben aufweisender Schraubverschlüsse ist aufwendig. Darüber hinaus ist die Schraubverbindung empfindlich und deshalb störanfällig.

Der Erfindung liegt die Aufgabe zugrunde, einen Adsorptionstrockner der eingangs genannten Art zu schaffen, der sich mit einem geringen Aufwand herstellen lässt und bei dem Montage und Wartungsarbeiten leicht durchzuführen sind.

Diese Aufgabe wird erfindungsgemäß dadurch gelöst, dass die Kolben an ihrem dem Trockenmittel abgewandten ringförmigen Außenrand eine Stufe und die Wand der Kammer innenseitig eine der Stufe gegenüberliegende Ringnut aufweisen und dass nach Art einer Feder-Nut-Verbindung ein in der Ringnut und auf der Stufe sitzendes Federelement die Beweglichkeit des jeweiligen Kolbens in Richtung der benachbarten Verteilerplatte begrenzt.

Beim erfindungsgemäßen Adsorptionstrockner erfordert sowohl die Herstellung als auch die Montage/Wartung einen vergleichsweise geringen Aufwand, da keine Schraubverschlüsse zur Festlegung der Kolben nötig sind. Die durch die Feder-Nut-Verbindung fixierten Kolben können nach einer Ausgestaltung der Erfindung auch zur axialen Verspannung der Druckbehälter mit der kopfseitigen und der bodenseitigen Verteilerplatte verwendet werden, indem die Verteilerplatten mittels Schraubenbolzen an den jeweils benachbarten Kolben angeschraubt sind.

Während der Leerraum zwischen dem kopfseitigen Kolben und der gasdurchlässigen Platte als Sammelraum für das über die Leitung im Kolben zu- und abzuführende Medium dient, sollte ein vergleichbarer, wenn auch im Volumen wesentlich kleinerer Sammelraum auch zwischen dem bodenseitigen Kolben und dem Trockenmittel vorgesehen sein. Dies lässt sich nach einer Ausgestaltung der Erfindung leicht dadurch verwirklichen, dass das Trockenmittel mit einer gasdurchlässigen Platte mit Abstand auf dem bodenseitigen Kolben abgestützt ist.

Die für die Zu- und Ableitung der Medien zu und von dem Trockenmittel benötigten Leitungen lassen sich nach einer weiteren Ausgestaltung der Erfindung sowohl herstellungstechnisch als auch montagetechnisch leicht dadurch verwirklichen, dass sie als zwischen der Kammer und den Verteilerplatten ausgebildete Standrohre mit an ihren beiden Enden vorgesehenen Steckverbindungen ausgebildet sind.

Sofern der Adsorptionstrockner, wie an sich bekannt, mehrere gleichartige Druckbehälter aufweist, ist es von Vorteil, diese parallel nebeneinander anzuordnen und an gemeinsamen Verteilerplatten anzuschließen.

Im folgenden wird die Erfindung anhand einer ein Ausführungsbeispiel darstellenden Zeichnung näher erläutert. Im einzelnen zeigen:

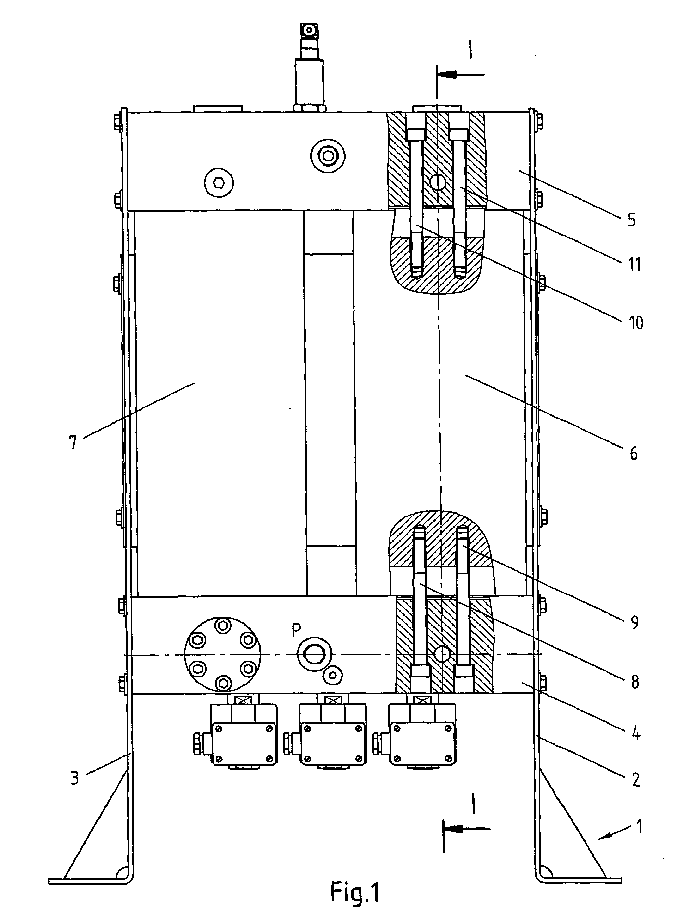

- Figur 1: einen Adsorptionstrockner für gasförmige Medien mit zwei Druckbehältern in Seitenansicht
**und**
- Figur 2: den Adsorptionstrockner gemäß Figur 1 im Vertikalschnitt nach Linie I-I der Figur 1.

Der Adsorptionstrockner weist einen Tragrahmen 1 mit seitlichen Ständern 2,3 auf, zwischen denen eine bodenseitige Verteilerplatte 4 und eine kopfseitige Verteilerplatte 5 befestigt sind. Zwischen den Verteilerplatten 4,5 sind zwei aus zylindrischen Rohrstücken gefertigte Druckbehälter 6,7 angeordnet. Jeder Druckbehälter 6,7 wird von Schraubenbolzen 8,9,10, 11 der Verteilerplatten 4,5 in später noch näher zu beschreibender Art und Weise gehalten. In den Verteilerplatten 4,5 sind Verbindungskanäle 4a,5a und Anschlüsse für das zu- und abzuführende Medium vorgesehen.

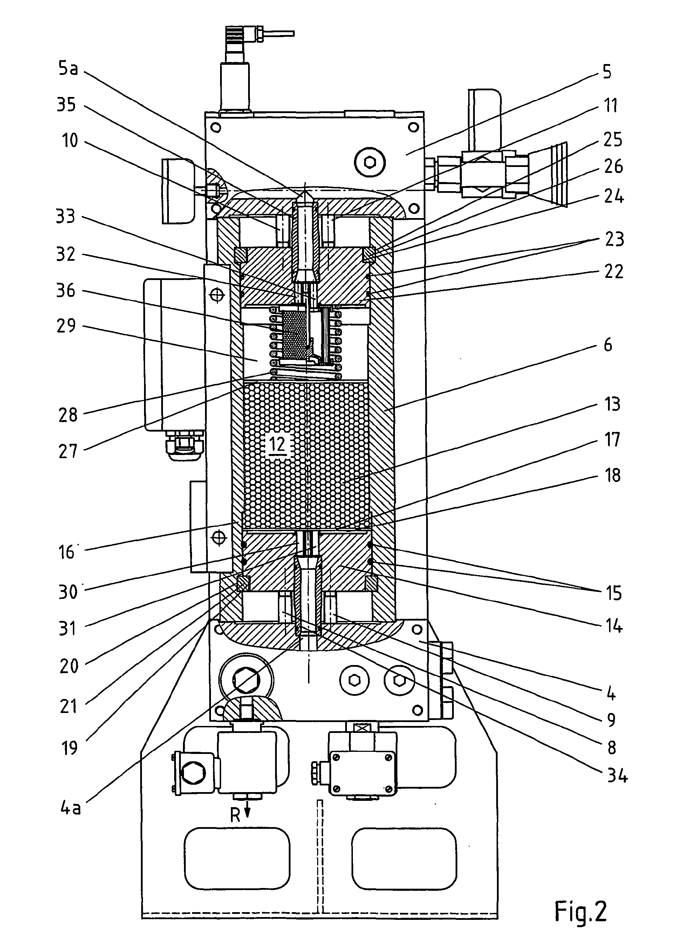

Jeder Druckbehälter 6,7 hat den gleichen Aufbau. Deshalb kann die weitere Beschreibung auf den Druckbehälter 6 beschränkt werden. Wie Figur 2 zeigt, weist der rohrförmige Druckbehälter 6 eine zylindrische Kammer 12 auf, in der Trockenmittel 13 untergebracht ist. Die zylindrische Kammer 12 ist bodenseitig von einem Kolben 14 verschlossen, der mit Ringdichtungen 15 gegenüber der zylindrischen Wand 16 der Kammer 12 abgedichtet ist. Das Trockenmittel 13 liegt nicht unmittelbar auf dem Kolben 14 auf, sondern auf einer am Kolben 14 mit Abstand abgestützten, gasdurchlässigen dünnen Platte 17. So ist zwischen dem Kolben 14 und der Platte 17 ein kleiner Sammelraum 18 geschaffen. Die Beweglichkeit des Kolbens 14 nach unten wird durch eine Feder-Nut-Verbindung begrenzt. Diese besteht aus einer ringförmigen Stufe 19 am Außenrand des Kolbens 14, einer Ringnut 20 in der Innenseite der Zylinderwand 16 und einem Federelement 21, das aus Gründen einer leichteren Montage als einteilige, geschlitzte Ringfeder oder aus mehreren Segmenten bestehen kann.

Kopfseitig weist der Druckbehälter 6 ebenfalls einen Kolben 22 auf, der mit Ringdichtungen 23 gegenüber der Zylinderwand 16 abgedichtet ist. Der kopfseitige Kolben 22 ist wie der bodenseitige Kolben 14 mittels einer Feder-Nut-Verbindung 24,25,26 axial festgelegt. Auch in diesem Fall ist das Trockenmittel 13 nicht unmittelbar an dem Kolben 22 abgestützt, sondern an einer dünnen gasdurchlässigen Platte 27, die ihrerseits mittels einer Schraubenfeder 28 am Kolben 22 abgestützt ist. Dadurch wird das Trockenmittel 12 unter Druck gesetzt. Durch die Schraubenfeder 28 wird außerdem die Feder-Nut-Verbindung 24,25,26 in Position gehalten. Andererseits ermöglicht die Feder 23, dass der Kolben 22 zurückgeschoben werden kann und dadurch die Feder-Nut-Verbindung 24,25,26 gelöst werden kann.

Zur axialen Verspannung des Druckbehälters 6 dienen, wie schon ausgeführt, Schraubenbolzen 8,9,10,11 der bodenseitigen und kopfseitigen Verteilerplatte 4,5. Wie den Figuren zu entnehmen ist, sind die Schraubenbolzen 8, 9,10,11 in die Kolben 14,22 eingeschraubt. Die Zu- und Ableitung des zu trocknenden beziehungsweise getrockneten Mediums erfolgt über die bodenseitige und kopfseitige Verteilerplatte 4,5. Zur Verbindung der Sammelräume 18, 29 unterhalb und oberhalb der Kammer 12 für das Trockenmittel 13 sind in den Kolben 14,22 etwa mittig axiale Kanäle 30,31,32,33 ausgebildet. Diese Kanäle 30, 31,32,33 münden in Standrohre 34,35, die mit ihren beiden Enden abgedichtet einerseits in den Kolben 14,22 und andererseits in den Verteilerplatten 4,5 mit den darin ausgebildeten Verbindungskanälen 4a,5a für die Zu- und Ableitung der Medien stecken. Solche Standrohre 34,35 erlauben eine schnelle Montage. Wie aus Figur 2 ersichtlich, kann vor den Kanälen 32,33 im Sammelraum 29 noch ein topfförmiges Filterelement 36 vorgesehen sein. Dieses Filterelement dient dazu, Trockenmittelstaub zurückzuhalten, der sonst beim Trocknungsbetrieb mit dem getrockneten Medium in die empfindlichen Bauteile der oberen Verteilerplatte gelangen könnte.

## Patentansprüche

1. Adsorptionstrockner für gasförmige Medien mit mindestens einem mit Trockenmittel (13) gefüllten Druckbehälter (6), der zwischen einer bodenseitigen und einer kopfseitigen, Verbindungskanäle und Anschlüsse für die Medien aufweisenden Verteilerplatte (4, 5) angeordnet ist und eine zylindrische Kammer (12) für das Trockenmittel (13) aufweist, das in der Kammer (12) bodenseitig und kopfseitig jeweils von einem gegenüber der Wand (16) der Kammer (12) abgedichteten Kolben (14, 22) abgestützt ist, wobei die Abstützung an mindestens einer Seite über eine am benachbarten Kolben (22) mit einer Druckfeder (28) abgestützten, gasdurchlässigen Platte (27) erfolgt und wobei die Kammer (12) über in den Kolben (14) abgedichtete Leitungen (34, 35) an die Verbindungskanäle in den Verteilerplatten (4, 5) angeschlossen ist,
**dadurch gekennzeichnet, dass** die Kolben (14, 22) an ihrem dem Trockenmittel (13) abgewandten ringförmigen Außenrand eine Stufe (19, 24) und die Wand (16) der Kammer (12) innenseitig eine der Stufe (19, 24) gegenüberliegende Ringnut (20, 25) aufweisen und dass nach Art einer Feder-Nut-Verbindung ein in der Ringnut (20, 25) und auf der Stufe (19, 24) sitzendes Federelement (21, 26) die Beweglichkeit des jeweiligen Kolbens (14, 22) in Richtung der jeweils benachbarten Verteilerplatte (4, 5) begrenzt.

2. Adsorptionstrockner nach Anspruch 1,
**dadurch gekennzeichnet, dass** das Trockenmittel (13) mit einer gasdurchlässigen Platte (17) mit Abstand auf dem bodenseitigen Kolben (14) abgestützt ist.

3. Adsorptionstrockner nach Anspruch 1 oder 2,
**dadurch gekennzeichnet, dass** die Leitungen (34, 35) zwischen der Kammer (12) und den Verteilerplatten (4, 5) als Standrohre mit an beiden Enden vorgesehenen Steckverbindungen ausgebildet sind.

4. Adsorptionstrockner nach einem der Ansprüche 1 bis 3,
**dadurch gekennzeichnet, dass** der Druckbehälter (6) mit der bodenseitigen und kopfseitigen Verteilerplatte (4, 5) axial verspannt ist, indem die Verteilerplatten (4, 5) mittels Schraubenbolzen (8, 9) an den benachbarten Kolben (14, 22) angeschraubt sind.

5. Adsorptionstrockner nach einem der Ansprüche 1 bis 4,
**dadurch gekennzeichnet, dass** bei mehreren gleichartigen, im Wechsel "Trocknen-Regenerieren" betriebenen Druckbehältern (6, 7) diese parallel nebeneinander angeordnet und an gemeinsamen Verteilerplatten (4, 5) angeschlossen sind.

## Claims

1. Adsorption dryer for gaseous media with at least one pressure vessel (6), filled with drying agent (13), which is arranged between a bottom and a top distributor plate (4, 5) comprising connection channels and ports for the media and has a cylindrical chamber (12) for the drying agent (13), which in the chamber (12) on the bottom and top in each case is supported by a piston (14, 22) sealed against the wall (16) of the chamber (12), wherein the support on at least one side is provided by means of a gas-permeable plate (27) held on the adjacent piston (22) with a compression spring (28) and wherein the chamber (12) is connected by means of lines (34, 35) sealed off from the piston (14) to the connection channels in the distributor plates (4, 5), **characterized in that** the pistons (14, 22) on their annular outer edge turned away from the drying agent (13) have a step (19, 24) and the wall (16) of the chamber (12) on the inside has an annular groove (20, 25) opposite the step (19, 24) and **in that** as a kind of tongue and groove connection a spring element (21, 26) seated in the annular groove (20, 25) and on the step (19, 24) limits the movement of the respective piston (14, 22) towards the particular adjacent distributor plate (4, 5).

2. Adsorption dryer according to Claim 1, **characterized in that** the drying agent (13) is supported by a gas-permeable plate (17) at a distance from the bottom piston (14).

3. Adsorption dryer according to Claim 1 or 2, **characterized in that** the lines (34, 35) are arranged between the chamber (12) and the distributor plates (4, 5) as vertical tubes with plug connections provided at both ends.

4. Adsorption dryer according to any one of Claims 1 to 3, **characterized in that** the pressure vessel (6) with the bottom and top distributor plate (4, 5) is axially clamped by the distributor plates (4, 5) being screwed onto the adjacent pistons (14, 22) by means of threaded bolts (8, 9).

5. Adsorption dryer according to any one of Claims 1 to 4, **characterized in that** in the case of several similar pressure vessels (6, 7) operating alternately between "drying and regeneration" these are arranged in parallel next to each other and are mounted on common distributor plates (4, 5).

## Revendications

1. Séchoir par adsorption pour milieux gazeux, comprenant au moins un récipient sous pression (6), rempli d'un agent de séchage (13), qui est agencé entre une plaque de séparation (4, 5), côté fond et côté tête, présentant des canaux de liaison et des raccords pour les milieux, et présente une chambre cylindrique (12) pour l'agent de séchage (13), qui s'appuie dans la chambre (12), côté fond et côté tête, chaque fois sur un piston étanche par rapport à la paroi (16) de la chambre (12), où l'appui est réalisé sur au moins un coté, par une plaque (27) perméable aux gaz, s'appuyant sur le piston voisin (22) avec un ressort de pression (28) et où la chambre (12) est raccordée par les conduites (34, 35) étanches dans le piston (14) aux canaux de liaison dans les plaques de séparation (4, 5),
**caractérisé en ce que** les pistons (14, 22) présentent sur leur bord externe annulaire, écarté de l'agent de séchage (13), un niveau (19, 24) et la paroi (16) de la chambre (12) présente côté intérieur, une rainure annulaire se trouvant en face du niveau (19, 24) et **en ce que** selon un assemblage à rainure et languette, un élément de ressort (21, 26) reposant dans la rainure annulaire (20, 25) et sur le niveau (19, 24) limite la mobilité de chaque piston (14, 22) en direction de chaque plaque de séparation voisine (4, 5).

2. Séchoir à adsorption selon la revendication 1, **caractérisé en ce que** l'agent de séchage (13) s'appuie avec une plaque perméable aux gaz (17) à une distance du piston côté fond (14).

3. Séchoir à adsorption selon la revendication 1 ou 2, **caractérisé en ce que** les conduites (34, 35) sont formées entre le chambre (12) et les plaques de séparation (4, 5) comme un tube statique avec connecteurs prévus à chaque extrémité.

4. Séchoir à adsorption selon l'une des revendications 1 à 3, **caractérisé en ce que** le récipient sous pression (6) est axialement étendu avec les plaques de séparation côté fond et côté tête, **en ce que** les plaques de séparation (4, 5) sont vissées à l'aide de boulons filetés (8, 9) sur les pistons voisins (14, 22).

5. Séchoir à adsorption selon l'une des revendications 1 à 4, **caractérisé en ce que** lors de plusieurs récipients sous pression (6, 7) similaires, fonctionnant alternativement selon « séchage-régénération », ceux-ci sont agencés en parallèle et sont raccordés sur les mêmes plaques de séparation (4, 5).
